# EUROPÄISCHE PATENTSCHRIFT

(11) **EP 1 230 774 B1**
(45) Veröffentlichungstag und Bekanntmachung des Hinweises auf die Patenterteilung: **23.06.2004**
(21) Anmeldenummer: 00984889.6
(22) Anmeldetag: 13.11.2000
(51) Int. Cl.: H04L 27/10, H04B 1/707, H04B 1/69

(54) **VERWENDUNG EINES AUF FREQUENZMODULATION BASIERENDEN TRANSCEIVERS FÜR MIT EINEM SPREIZSPEKTRUMVERFAHREN KODIERTE SIGNALE**
USE OF A FREQUENCY MODULATION TRANSCEIVER FOR SPREAD SPECTRUM CODED SIGNALS
UTILISATION D'UN EMETTEUR-RECEPTEUR A MODULATION DE FREQUENCE POUR SIGNAUX CODES PAR ETALEMENT DU SPECTRE

(30) Priorität: 15.11.1999 DE 19954897
(43) Veröffentlichungstag der Anmeldung: 14.08.2002
(73) Patentinhaber: Infineon Technologies AG, 81669 München (DE)
(72) Erfinder: KRANZ, Christian, 40885 Ratingen (DE); NEUBAUER, André, 47807 Krefeld (DE)
(74) Vertreter: Lange, Thomas, Dr.
(86) Internationale Anmeldenummer: PCT/DE2000/003984
(87) Internationale Veröffentlichungsnummer: WO 2001/037504

(56) Entgegenhaltungen:
- EP-A- 0 358 466
- EP-A- 0 909 039
- US-A- 5 341 396
- US-A- 5 412 687

## Beschreibung

Die Erfindung betrifft eine Verwendung eines auf Frequenzmodulation basierenden Transceivers für mit einem Spreizspektrumverfahren kodierte Signale, insbesondere für mit dem Direct-Sequence-CDMA-Verfahren kodierte Signale.

Eine derartige Verwendung ist aus US-A-5 341 396 bekannt.

Für den Einsatz im industriellen, medizinischen oder wissenschaftlichen Sektor ist weltweit das ISM-Frequenzband (Industrial-Scientific-Medical) bei 2,4 GHz verfügbar. Auf dieses Frequenzband kann unter Einhaltung der von der FCC (Federal-Communications-Commission) herausgegebenen Richtlinien mittels der Spreizspektrumtechnik (Spread-Spectrum-Technology) zugegriffen werden. Beispielsweise können dabei Schnurlos-Telefone oder auf Funkübertragung basierende Telekommunikationssysteme zur Übertragung von Meßwerten unter Nutzung des ISM-Frequenzbandes realisiert werden.

Vorwiegend wird für Systeme, die das ISM-Frequenzband nutzen, DS-CDMA (Direct-Sequence-Code Division Multiple Access) oder FH-CDMA (Frequency-Hopping- Code Division Multiple Access) als Zugriffsverfahren auf den Funkkanal verwendet. Als Modulationsverfahren wird üblicherweise bei Systemen mit DS-CDMA die PSK-Modulation (Phase-Shift-Keying-Modulation) und bei Systemen mit FH-CDMA die FSK-Modulation (Frequeny-Shift-Keying-Modulation) eingesetzt.

In vielen bereits auf dem Markt befindlichen schnurlosen Telekommunikationssystemen wie beispielsweise DECT (Digital Enhanced Cordless Communication), WDCT (Worldwide Digital Cordless Communication) oder bei Bluetooth-Systemen kommen dagegen Transceiver (Sender/Empfänger), die auf der GFSK-Modulation (Gaussian-Frequency-Shift-Keying) basieren, zum Einsatz. Die GFSK-Mndulation ist eine besondere Form der FSK-Modulation, bei der ein Gaußscher Tiefpaß mit einem vorgegebenen Bandbreite-Symboldauer-Produkt BT, beispielsweise von 0,5, zur Basisbandvorfilterung eingesetzt wird. Mit GFSK modulierte Signale weisen eine konstante Einhüllende auf, wodurch vorteilhafterweise einfache Sendeverstärker benutzt werden können. Allerdings eignen sich solche Telekommunikationssysteme beispielsweise nicht für das DS-CDMA-Zugriffsverfahren aufgrund des dafür erforderlichen PSK-Modulationsverfahrens. Demnach muß bei solchen Telekommunikationssystemen zur Verwendung des DS-CDMA-Zugriffsverfahrens ein für das PSK-Modulationsverfahren geeigneter Transceiver, der wiederum nicht für die FSK-Modulation geeignet ist, eingesetzt werden.

Für die vorliegenden Erfindung stellt sich daher die Aufgabe, ein Verfahren zu schaffen, das die Anwendung eines für das GFSK-Modulationsverfahren ausgelegten Transceivers für das DS-CDMA-Zugriffsverfahren ermöglicht.

Diese Aufgabe wird durch ein Verfahren mit den Merkmalen von Patentanspruch 1 gelöst. Weitergehende Ausgestaltungen des erfindungsgemäßen Verfahrens ergeben sich aus den abhängigen Patentansprüchen.

Die der Erfindung zugrundeliegende Idee besteht in einer Kodierung der für das Spreizspektrumverfahren benutzten Chipsequenzen durch erste Datensymbole, die mittels Frequenzmodulation übertragen werden. Jede Chipsequenz stellt wiederum ein Datensymbol aus einer Vielzahl von ersten Datensymbolen dar, den eigentlichen mit einem Spreizspektrumverfahren zu übertragenden Daten. Dadurch kann der Transceiver, der für das Senden und Empfangen frequenzmodulierter Signale konzipiert ist, ohne schaltungstechnische Veränderungen für mit einem Spreizspektrumverfahren kodierte Signale eingesetzt werden. Solche Transceiver werden beispielsweise bei DECT-, WDCT-, SWAP- oder Bluetooth-Systemen eingesetzt. Allerdings muß dabei eine Reduzierung der zur Verfügung stehenden Übertragungsrate um den Faktor L in Kauf genommen werden, da die Dauer einer Chipsequenz L·T_{Bit} beträgt und durch eine Chipsequenz genau ein erstes Datensymbol der Dauer T_{Bit} kodiert ist. Durch die reduzierte Datenrate eignet sich die Erfindung insbesondere für Schnurlos-Telefone mit einer TDD (Time-Division-Duplex)-Sprachverbindung oder zur Übertragung von Meßwerten mit geringer Datenrate.

Vorzugsweise sendet und empfängt der Transceiver Signale, die mit dem Gaussian-Frequency-Shift-Keying-Modul-ationsverfahren moduliert sind. Dieses Modulationsverfahren wird beispielsweise bei schnurlosen Telefonen nach dem DECT-Standard eingesetzt und ist daher weitverbreitet und mit billigen Sende-Empfangsstufen ausführbar.

Die ersten Datensymbole sind bevorzugt binäre bzw. zweiwertige Datensymbol, wodurch sich die einem ersten Datensymbol dₙ zugeordnete Folge je nach seinem Wert in der Form c_{n,ν} oder 1-c_{n,ν} mit ν= 0,..,L-1 angeben läßt.

Die mit einem Spreizspektrumverfahren kodierten Signale sind vorzugsweise mit dem Direct-Sequence-CDMA-Verfahren kodiert. Dadurch kann ohne großen Aufwand ein nach dem GFSK-Verfahren arbeitender Transceiver eingesetzt werden.

In einer alternativen bevorzugten Verwendung ist der Transceiver für Frequency-Hopping geeignet und die mit einem Spreizspektrumverfahren kodierten Signale sind mit dem Frequency-Hopping-CDMA-Verfahren (FH-CDMA) kodiert. Hierdurch ergibt sich die Möglichkeit einer Anwendung sowohl für DS-CDMA als auch für FH-CDMA-kodierte Signale. Ein solcher Transceiver wird dann entsprechend der Kodierung der zu sendenden und der empfangenen Signale umgeschaltet.

Vorzugsweise sendet und empfängt der Transceiver Signale in den ISM-Frequenzbändern (ISM-Band: Industriäl-Scientific-Medical-Band)Als Beispiel sei hier das 2,4 GHz Frequenzband genannt, das von der Federal-Communications-Commission für den Gebrauch in Industrie, Wissenschaft und Medizin freigegeben ist und beispielsweise zur Übertragung von Meßwerten über Funk genutzt werden kann.

Beispielsweise kann für den Transceiver ein Sender aus einem DECT- oder WDCT-System, der nach dem Open-Loop-Prinzip arbeitet, eingesetzt werden. Alternativ können aber auch nach dem Closed-Loop-Prinzip arbeitende Sender wie beispielsweise ein ∑Δ-modulierter fractional-N PLL-;Frequenz-Synthesizer eingesetzt werden.

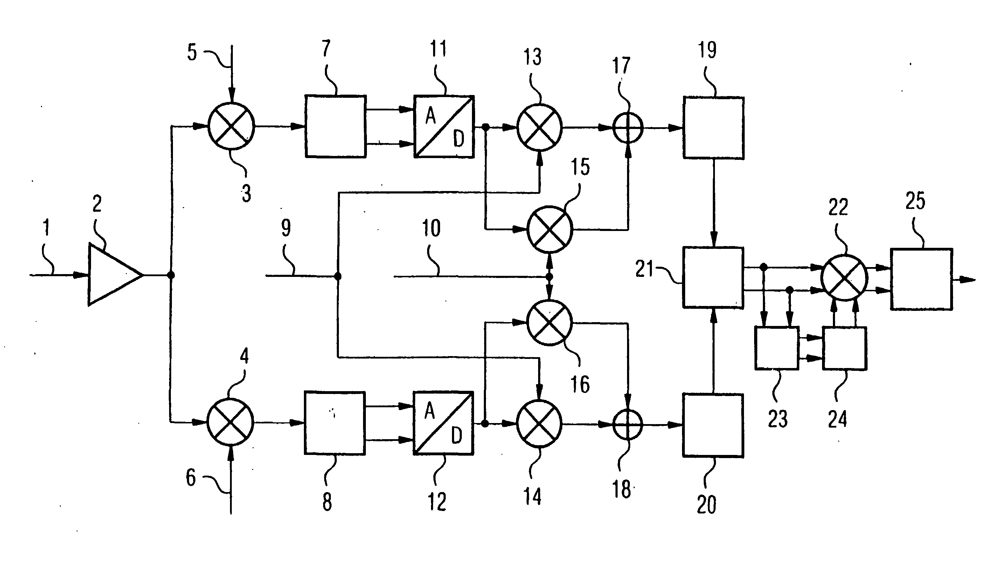

Weitere Vorteile und Anwendungsmöglichkeiten ergeben sich aus der nachfolgenden Beschreibung eines Ausführungsbeispiels der Erfindung in Verbindung mit der Zeichnung. In der Zeichnung zeigt
Figur 1 den Aufbau eines Empfängers eines Transceivers zur erfindungsgemäßen Verwendung.

Der in Figur 1 dargestellte Empfänger verstärkt ein hochfrequentes Empfangssignal 1 mit einem rauscharmen Verstärker 2 (LNA: Low-Noise-Amplifier) und führt die I- und Q-Komponente des verstärkten Empfangssignales einem ersten Multiplizierer 3 bzw. einem zweiten Multiplizierer 4 zu. Der erste Multiplizierer 3 multipliziert das zugeführte Signal (I-Komponente) mit einer Trägerfrequenz 5, um aus dem Empfangssignal 1 das Basisbandempfangssignal zu erhalten. Analog multipliziert der zweite Multiplizierer 4 das zugeführte Signal (Q-Komponente) mit einer Trägerfrequenz 6, um ebenfalls aus dem Empfangssignal 1 das Basisbandempfangssignal zu erhalten.

Die so auf die Basisbandempfangssignale. "heruntergemischten" Empfangssignalkomponenten werden jeweils einem ersten Antialiasing-Filter 7 und einem zweiten Antialiasing-Filter 8 zugeführt, um für eine Digitalisierung der Basisbandempfangssignale das Shannonsche Abtasttheorem zu erfüllen.

Durch einen ersten Analog-Digital-Umsetzer 11 und einen zweiten Analog-Digital-Umsetzer 12 werden die tiefpaßgefilterten Signale digitalisiert, in ihrer Frequenz verschoben, gefiltert und einem differentiellen Demodulator zugeführt. Alternativ kann anstelle eines differentiellen Demodulators auch ein in DECT- oder WDCT-Systemen eingesetzter analoger FM-Demodulator nach dem Limiter-Diskriminator-Prinzip eingesetzt werden. Dabei ist allerdings aufgrund der Nichtlinearitäten des analogen FM-Demodulators mit Einbußen bei der Störsignalunterdrückung zu rechnen.

Der Frequenzumsetzer weist einen dritten bis sechsten Multiplizierer 13 bis 16 und einen ersten 17 und zweiten 18 Addierer auf. Der dritte Multiplizierer 13 und der vierte Multiplizierer 14 multiplizieren das zugeführte digitalisierte Signal mit einem ersten Steuersignal 9, parallel dazu multiplizieren der fünfte Multiplizierer 15 und der sechste Multiplizierer 16 das zugeführte digitalisierte Signal mit einem zweiten Steuersignal 10. Das erste Steuersignal 9 und das zweite Steuersignal 10 entsprechen den beiden bei der Modulation des dem Empfangssignal zugrunde liegenden Sendesignals in einem Sender Signalkomponenten, die zur Erzeugung des binären Sendesignals verwendet werden. Das Ausgangssignal des dritten Multiplizierers 13 und des fünften Multiplizierers 15 bzw. das Ausgangssignal des vierten Multiplizierers 14 und des sechsten Multiplizierers 16 wird durch einen ersten Addierer 17 bzw. durch einen zweiten Addierer 18 addiert und einem ersten Filter 19 bzw. einem zweiten Filter 20 zugeführt.

Das erste Filter 19 und das zweite Filter 20 filtern die demodulierten Signale und führen diese einer Nachverarbeitungseinrichtung 21 zu, die die beiden Signale normiert und zusammenführt. Das Ausgangssignal der Nachverarbeitungseinrichtung 21 wird einem differentiellen Demodulator bestehend aus einem Multiplizierer 22 und einem parallelen dazu angeordneten Verzögerungsglied 23 sowie einem nachgeschalteten Element 24 zur Bildung des Konjugiert-Komplexen zugeführt. Das Ausgangssignal des Elements 24 wird ebenfalls dem Multiplizierer 22 zugeführt und mit dem Ausgangssignal der Nachverarbeitungseinrichtung 21 multipliziert. Das Ausgangssignal des siebten Multiplizierers 22 wird einem Imaginärteilerzeuger 25 zugeführt, der aus dem zugeführten Signal den Imaginärteil filtert.

Im folgenden wird die erfindungsgemäße verwendung an einem einfachen Ausführungsbeispiel erläutert:

Binäre Datensymbole dₙ ∈ {0, 1} werden bei DS-CDMA mittels Chipsequenzen <c_{n,0}, ..., c_{n,L-1}> mit Chips c_{n,ν} ∈ {0, 1} kodiert. Die Chipsequenzen weisen dabei eine Länge L auf. Das binäre Datenbit dₙ = 1 wird durch Aussenden einer Chipsequenz <c_{n,0}... , c_{n,L-1}> und das binäre Datenbit dₙ = 0 durch Aussenden der invertierten Chipsequenz <1-cₙ,₀, ..., 1-c_{n,L-1}> übertragen. Die Verwendung solcher Chipsequenzen in schnurlosen Telekommunikationssystemen innerhalb des ISM-Frequenzbandes dient zur Unterdrückung schmalbandiger Störsignale, die bei dem breitbandigen CDMA-Verfahren weniger störenden Einfluß als bei einem schmalbandigen Zugriffsverfahren wie F/TDMA (Frequency/Time-Division-Multiple-Access) haben. Von der FCC ist ein Mindest-Verarbeitungsgewinn (Processing Gain) zur Unterdrückung von Störsignalen definiert, der von Telekommunikationssystemen, die. das ISM-Band nutzen, erfüllt werden muß, um mögliche Störsignale zu vermeiden bzw. zu unterdrücken. Unter Einhaltung dieses von der FCC vorgegebenen Mindest-Verarbeitungsgewinns können Transceiver für mit dem (G)FSK-Modulationsverfahren modulierte Signale für das DS-CDMA-Zugriffsverfahren angewandt werden.

Dazu werden lediglich die Bits d'ₖ eines mit (G)FSK modulierten Signals den Chips der obigen Chipsequenzen zugeordnet: d'ₖ = c_{n,ν} für das binäre Datenbit dₙ = 1 und d'ₖ = 1cc_{n,ν} für das binäre Datenbit dₙ = 0 mit k=n·L + ν. Damit entspricht die Bitrate T'_{Bit} des mit (G)FSK modulierten Signals der Chip-Bitrate T_{Chip}. Durch diese einfache Abbildung kann ein DS-CDMA-System realisiert werden. Das Bandbreite-Zeitdauer-Produkt BT'_{Bit} des Gauß-Tiefpaßes des (G)FSK-Systems gilt damit ebenso für das DS-CDMA-System. Die sich ergebende Bitrate T_{Bit} des DS-CDMA-Systems entspricht einer um die Länge L der Chipsequenz reduzierten Bitrate T'_{Bit} des (G)FSK-Systems: 1/T_{Bit} = 1/ (T'_{Bit} L).

Bei einer Hard-Decision erfolgt eine Detektion der Chips c_{n,ν} in einem Empfänger wie eine Detektion der Bits d'ₖ des mit (G)FSK modulierten Signals. Eine Entscheidung für das gesendete Bit dₙ = 1 oder dₙ = 0 erfolgt dabei im Empfänger durch einen Vergleich der empfangenen Chipsequenz mit den ungestörten Chipsequenzen <c_{n,0}, ..., c_{n,L-1}> für das Bit dₙ = 1 und <1-c_{n,0}, ..., 1-c_{n,L-1}> für das Bit dₙ = 0. Alternativ kann auch eine Soft-Decision bei einem mit höherer Genauigkeit zur Verfügung stehenden Ausgangssignal des Demodulators erfolgen.

## Patentansprüche

1. Verwendung eines auf Frequenzmodulation basierenden Transceivers für mit einem Spreizspektrmnverfahren kodierte Signale, wobei ausgehend von einer Folge von M-wertigen ersten Datensymbolen dₙ jedem dieser ersten Datensymbolen dₙ eine Folge von L zweiten binären Datensymbolen zugeordnet wird, wobei die L-elementigen Folgen von zweiten Datensymbolen für das Spreizspektrumverfahren benutzten Chipsequenzen entsprechen, **dadurch gekennzeichnet, daß** die Dauer einer Chipsequenz gegenüber der Dauer der ersten Datensymbole dₙ um den Faktor L gestreckt ist, und wobei das aus der Abfolge der zweiten Datensymbole bestehende Signal von dem Transceiver für die Frequenzmodulation verwendet wird.

2. Verwendung nach Anspruch 1, **dadurch gekennzeichnet, daß** der Transceiver mit dem Gaussian-Frequency-Shift-Keying-Modulationsverfahren modulierte Signale sendet und empfängt.

3. Verwendung nach Anspruch 1 oder 2, **dadurch gekennzeichnet , daß** die ersten Datensymbole dₙ binäre bzw. zweiwertige Datensymbole sind, wobei unter der Voraussetzung, daß die dem einen Datensymbolwert zugeordnete Folge aus L zweiten Datensymbolen mit c_{n,ν,} ν= 0,..,L-1, bezeichnet wird, dem anderen Datensymbolwert die Folge 1-c_{n,ν} zugeordnet' ist.

4. Verwendung nach einem der vorhergehenden Ansprtiche, **dadurch gekennzeichnet, daß** die mit einem Spreizspektrumverfahren kodierten Signale mit dem Direct-Sequence-CDMA-Verfahren kodiert sind.

5. Verwendung nach einem der Ansprüche 1 bis 3, wobei der Transceiver für Frequency-Hopping geeignet ist und die mit einem Spreizspektrumverfahren kodierten Signale mit dem Frequency-Hopping-CDMA-Verfahren kodiert sind.

6. Verwendung nach einem der vorhergehenden Ansprüche, **dadurch gekennzeichnet, daß** der Transceiver Signale in einem Frequenzband von 2,4 GHz sendet und empfängt.

## Claims

1. Use of a transceiver based upon frequency modulation for signals that are coded by means of a method for spreading spectrums, a series of first data symbols dₙ having the value M being used as a basis for assigning a series of L second binary data symbols to each of these first data symbols dₙ, the L-element series of second data symbols corresponding to chip sequences used for the spectrum-spreading method, **characterized in that** the duration of a chip sequence has been extended in comparison with the duration of the first data symbols dₙ by the factor L, and the signal comprising the sequence of second data symbols being used by the transceiver for the frequency modulation.

2. Use according to Claim 1, **characterized in that** the transceiver sends and receives signals modulated by means of the Gaussian-Frequency Shift Keying Modulation method.

3. Use according to Claim 1 or 2, **characterized in that** the first data symbols dₙ are binary data symbols or data symbols having the value two, it being provided that, on condition that the series comprising L second data symbols assigned to the one data symbol value is referred to as c_{n,ν}, ν = 0,..., L-1, the other data symbol value is assigned the series 1-c_{n,ν}.

4. Use according to one of the preceding claims, **characterized in that** the signals coded by means of a spectrum-spreading method are coded by means of the direct-sequence CDMA method.

5. Use according to one of Claims 1 to 3, the transceiver being suitable for frequency hopping and the signals coded by means of a spreading-spectrum method being coded by means of the frequency-hopping CDMA method.

6. Use according to one of the preceding claims, **characterized in that** the transceiver transmits and receives signals within a frequency band of 2,4 GHz.

## Revendications

1. Utilisation d'un émetteur-récepteur à modulation de fréquence pour des signaux codés par un procédé par étalement du spectre, dans lequel en partant d'une suite de premiers symboles dₙ de données à M valeurs, on associe, à chacun de ces premiers symboles dₙ de données, une suite de L deuxièmes symboles de données binaires, les suites à L éléments de deuxièmes symboles de données correspondant à des séquences de puce utilisées pour le procédé par étalement du spectre, **caractérisée en ce que** la durée d'une séquence de puce est étendue par rapport à la durée des premiers symboles dₙ de données du facteur L et on utilise, pour la modulation de fréquence, le signal de l'émetteur-récepteur constitué de la succession des deuxièmes symboles de données.

2. Utilisation suivant la revendication 1, **caractérisée en ce que** l'émetteur-récepteur émet et reçoit des signaux modulés par un procédé de modulation par déplacement de fréquence Gaussien.

3. Utilisation suivant la revendication 1 ou 2, **caractérisée en ce que** les premiers symboles dₙ de données sont des symboles de données binaires ou à deux valeurs, dans laquelle, en supposant que la suite associée à l'une des valeurs de symboles de données est constituée de L deuxièmes symboles de données est désignée par Cₙ , υ = 0...L-1, il est associé à l'autre valeur de symbole de données la suite 1- C_{nυ}.

4. Utilisation suivant l'une des revendications précédentes, **caractérisée en ce que** les signaux codés par un procédé à étalement du spectre sont codés par le procédé direct-sequence-CDMA.

5. Utilisation suivant l'une des revendications 1 à 3, dans laquelle l'émetteur-récepteur est approprié pour du frequency-hopping et les signaux codés par un procédé par étalement du spectre sont codés par le procédé frequency-hopping-direct-CDMA.

6. Utilisation suivant l'une des revendications précédentes, **caractérisée en ce que** l'émetteur-récepteur émet et reçoit des signaux dans une bande de fréquence de 2,4 GHz.
